# EUROPÄISCHE PATENTSCHRIFT

(11) **EP 3 795 958 B1**
(45) Veröffentlichungstag und Bekanntmachung des Hinweises auf die Patenterteilung: **07.06.2023**
(21) Anmeldenummer: 20197196.7
(22) Anmeldetag: 21.09.2020
(51) Int. Cl.: G01G 19/44

(54) **WAAGE**
SCALE
BALANCE

(30) Priorität: 20.09.2019 DE 102019125385
(43) Veröffentlichungstag der Anmeldung: 24.03.2021
(73) Patentinhaber: Leifheit AG, 56377 Nassau (DE)
(72) Erfinder: BOSSCHER, Eric, 56379 Obernhof (DE)
(74) Vertreter: btb IP Bungartz Baltzer Partnerschaft mbB Patentanwälte

(56) Entgegenhaltungen:
- EP-A1- 2 489 997
- US-A1- 2015 018 991
- US-A1- 2016 033 319

## Beschreibung

Die Erfindung betrifft eine Waage nach dem Oberbegriff des Anspruchs 1. Die gattungsgemäßen Waagen weisen dabei insbesondere eine Tragplatte zur Aufnahme einer zu wiegenden Last, eine Sensorik mit zumindest einem Messsensor zur Ermittlung wenigstens einer, für das Gewicht der Last signifikanten Größe, eine Elektronik zur Berechnung eines Wiegeergebnisses aus einem von der Sensorik bereitgestellten Messergebnis und eine Schaltvorrichtung zum Aus- oder Anwählen einer Funktion der Waage auf, wobei ein Benutzer die Funktion der Waage durch Ausüben eines Drucks auf einen Bereich der Tragplatte oder durch Annähern an einen Bereich der Waage aus- oder anwählt.

Eine Waage dieser Art ist aus der EP 1 371 954 B2 bekannt. Diese Waage weist eine Tragplatte auf, die sich über Wägezellen auf dem Boden abstützt, wobei die Tragplatte einen Unterbau und eine darauf befestigte gläserne obere Platte aufweist. Unterhalb der gläsernen oberen Platte, entweder an diese angeklebt oder im Unterbau befestigt, befindet sich eine Elektrode eines kapazitiven Näherungssensors, der zum Einschalten der Waage dient. Eine Anzeigevorrichtung zum Anzeigen des von der Elektronik errechneten Gewichtswertes befindet sich im Unterbau und ist durch die gläserne obere Platte sichtbar. Alternativ kann die Anzeigevorrichtung natürlich auch in die gläserne, obere Platte integriert werden.

Diese Waage hat den Vorteil, dass sie einfach ein und ausgeschaltet werden kann und dass die verwendete Sensorik darüber hinaus einen besonders formschönen Aufbau der Waage durch eine flache Gestaltung des Unterbaus und den weitgehenden Wegfall eines Gehäuses ermöglicht. Sie hat jedoch den Nachteil, dass der Benutzer den kapazitiven Sensor zum Einschalten der Waage zwar nur leicht berühren muss oder dass der Sensor bereits vor dem Berühren durch bloßes Annähern schaltet, aber der Benutzer keine klare Rückmeldung darüber erhält, ob sein Bedienbefehl tatsächlich erkannt und ausgeführt wurde oder nicht. Während dies beim Einschalten der Waage im Wesentlichen nur ein Komfortproblem darstellt und technisch weitgehend unproblematisch ist, da die Ausführung des Benutzerbefehls durch das Einschalten der Anzeigevorrichtung üblicherweise klar erkennbar ist, bestehen dann Unsicherheiten, wenn über den Sensor weitere Funktionen der Waage nach dem Einschalten betätigt oder ausgewählt werden soll. Insbesondere eine Tara-Funktion oder ein Speichern eines Zwischenergebnisses beim Zuwiegen im Falle einer Küchenwaage sollten dem Benutzer klar ein eindeutig kenntlich gemacht werden, wobei Anzeigevorrichtungen bei einigen Waagen und Anwendungen hierzu nur bedingt in Betracht kommen, da sie zusätzlich wahrgenommen werden müssen und auch durch das Wiegegut verdeckt sein können.

Aus der US 2016/033319 A1 ist eine Fitnesswaage bekannt. Diese Fitnesswaagen messen die physiologischen Daten eines Benutzers, der eine Sensorschaltung auf einem Plattformbereich der Waage betätigt. In einem Fitnesstestmodus werden die physiologischen Daten des Benutzers bei den jeweiligen Zuständen der körperlichen Anstrengung erfasst. Die physiologischen Daten werden dann von benutzerspezifischen Schaltkreisen verarbeitet, um physiologische Parameter des Benutzers zu bestimmen, die sich auf die jeweiligen Zustände der körperlichen Anstrengung beziehen, wie z. B. eine Zunahme der Anstrengung oder eine Abnahme der Anstrengung. Diese physiologischen Parameter können beispielsweise verwendet werden, um einen Hinweis auf die körperliche Gesundheit und Fitness des Benutzers zu geben. Diese Parameter können dann dem Benutzer zugeordnet und in einem Datenzugriffskreis gespeichert sowie an ein Display weitergeleitet werden, das die physiologischen Parameter neben anderen Informationen über die Plattformregion an den Benutzer übermittelt.

Die bekannte Fitnesswaage ermittelt zunächst die physiologischen Parameter und wertet diese dann in einem Auswertungsschritt aus. Sobald die Berechnung abgeschlossen ist wird dies dem Benutzer auf unterschiedliche Weise angezeigt, eine Möglichkeit besteht darin, dass der Benutzer durch Vibrationserregung der Tragplatte ein haptisches Feedback erhält.

Aus der US 2017/0018991 A1 ist Gerät zur Bestimmung des Zustandes eines Benutzers bekannt. Dieses Gerät kann als Waage ausgebildet sein. Es ermittelt Gesundheitsdaten einer Person und gibt diese über eine Ausgabe Einheit eines externen Gerätes aus. Dabei können verschiedene Zustände und Ziele hinterlegt werden und über eine Interaktion zwischen Benutzer und Gerät kann der Benutzer aufgefordert werden, die Intensität zu steigern. Das Erreichen eines bestimmten Ziels wird dann ausgegeben, wobei diese Information bei einer Ausgestaltung über ein Vibrieren dem Benutzer zur Kenntnis gebracht werden kann.

Die beiden bekannten Waagen weisen zwar eine Möglichkeit auf, über Vibrationen und damit ein gewisses Feedback dem Benutzer Informationen mitzuteilen, sind aber nicht in der Lage, Schalthandlungen, die der Benutzer in Form eines Schaltbefehls eingibt, zu quittieren. Es wäre daher wünschenswert, dass der Benutzer eine Rückmeldung erhält, ob sein Schaltbefehl akzeptiert wurde oder nicht. Auch wird eine solche Rückmeldung von vielen Benutzern als Qualitäts- oder Komfortmerkmal angesehen.

Aus US 2015/0021102 A1 ist eine Gepäckwaage bekannt, die ein in der Hand zu haltendes Gehäuse und einen Aufnahmehaken zum Anhängen des zu wiegenden Gepäckstückes aufweist. Bei einer optionalen Ausgestaltung weist diese Waage an dem Gehäuse eine Eingabemöglichkeit für den Benutzer auf, wobei über ein haptisches Feedback dem Benutzer das Erkennen eines eingegebenen Befehls am Gehäuse signalisiert wird.

Aus der DE 10 2011 011 817 A1 wiederum ist eine Waage bekannt, die ein, die Tragplatte aufweisendes Gehäuse mit nach oben hervorspringendem Arm aufweist, an dem die Anzeigevorrichtung mit einem berührungssensitiven Display zur Schaffung einer Bedieneinheit angeordnet ist. Dieses fest mit dem Gehäuse verbundene Display kann zur Quittierung von Eingabebefehlen ein haptisches Feedback aufweisen.

Die beiden letztgenannten Waagen sind zwar in der Lage, dem Benutzer den Eingabebefehl durch ein haptisches Feedback zu quittieren, allerdings ist diese Funktion einem separaten Gehäuse integriert, so dass dies nur möglich ist, wenn die Bedieneinheit in einem solchen, für den Benutzer zugänglichen Gehäuse vorgesehen ist.

Aufgabe der Erfindung ist es daher, eine Waage zu schaffen, die bei möglichst geringen Herstellungskosten dem Benutzer eine größere Bediensicherheit und einen gesteigerten Bedienkomfort bietet.

Diese Aufgabe wird nach der Erfindung durch eine Waage nach Anspruch 1 gelöst.

Die erfindungsgemäßen Waagen zeichnen sich insbesondere dadurch aus, dass die Waage zumindest einen haptischen Rückmeldeaktuator umfasst, der bei erkannter Schalthandlung ein haptisches Feedback für den Benutzer durch mechanische Erregung oder Bewegung der Tragplatte und damit des darin integrierten Schaltbereichs erzeugen vermag. Durch dieses haptische Feedback erhält der Benutzer eine klare Quittierung seines eingegebenen Befehls. Diese Quittierung kann optional durch ein zusätzliches Geräusch, das zum Beispiel dem typischen Geräusch eines Tastaktuators nachempfunden sein kann und von einem Geräuschgenerator der Waage erzeugt wird, unterstützt werden.

Besonders vorteilhaft bei der Lösung nach der Erfindung ist die Tatsache, dass insbesondere in Verbindung mit Sensoren, die verdeckt an der Tragplatte angeordnet sind, beispielsweise kapazitiven Näherungssensoren, durch die Wirkung des haptischen Rückmeldeaktuators auf die Tragplatte selbst, sei es unmittelbar oder mittelbar durch eine zweilagige Tragplatte, so wie es weiter unten im Zusammenhang mit den Figuren noch im Detail beschrieben ist, auch bei dieser Gestaltung einer Form schönen, schlichten Küchen- oder Personenwaage ein haptisches Feedback gegeben werden kann, ohne dass ein aufwendiger, berührungssensitive Bildschirm oder eine Lösung mit einem separaten Gehäuse als Bedieneinheit notwendig wäre.

Im Zusammenhang mit der vorliegenden Erfindung verwendbare haptische Rückmeldeaktuatoren sind auf dem Markt erhältlich und weisen üblicherweise piezoelektrische Schichten oder Blöcke auf, die sich bei Anlegen einer Spannung in eine Richtung zusammenziehen und in die hierzu rechtwinklige Richtung spontan ausdehnen. Die Ausdehnungsgeschwindigkeit ist dabei so schnell, dass der Eindruck eines Tastendrucks entsteht. Ein solcher Rückmeldeaktuator wird beispielsweise von der Firma TDK unter der Serien-bzw. Typenbezeichnung 0909H011V060 "PowerHap" vertrieben, wobei dieser Aktuator zusätzlich über die Funktion verfügt, dass er gleichzeitig auch Schaltaktuator sein kann. Im einfachsten Fall reicht allerdings die Rückmeldefunktion zur Umsetzung der Erfindung bereits aus, da die Elektronik über eine separate Sensorik den Schaltbefehl üblicherweise ermitteln kann.

Der Schaltaktuator zum Aus- oder Anwählen einer Funktion der Waage ist das Bauteil, das beispielsweise zum Ein- oder Ausschalten oder zum Bedienen der Waage während des Betriebs verwendet wird. Oft wird als Schaltaktuator ein kapazitiver Näherungssensor verwendet. Dieser kann beispielsweise dadurch leicht und günstig aufgebaut werden, dass auf oder unter der Rückseite der Tragplatte der Waage an der Position des Schaltaktuator eine Elektrode angeordnet wird. Diese kann durch Aufdrucken auf die Rückseite der Tragplatte gebildet werden oder aus einer elektrisch leitfähigen Schicht bestehen, die auf die Tragplatte aufgeklebt wird oder in einem unter der Tragplatte angeordneten Gehäuse als metallische Elektrode vorgesehen ist. Der kapazitive Näherungssensor überwacht dann die Umgebung und löst bei einer Annäherung an die Elektrode den Schaltimpuls aus.

Alternativ kann die Erfindung aber auch mit anderen Sensoren umgesetzt werden, dies können beispielsweise thermische Sensoren zur Wärmeerkennung, Vibrationssensoren, Folientaster oder sonstige Tastsensoren sein. Insbesondere in Verbindung mit Schaltaktuatoren, die kein Feedback erzeugen, ist aber die Erfindung besonders vorteilhaft einsetzbar.

Wird über den Schaltaktuator ein Schaltimpuls ausgelöst, wird zeitgleich oder sehr kurze Zeit später der Rückmeldeaktuator zum Erzeugen des haptischen Feedbacks über die Elektronik der Waage aktiviert. Dieser Rückmeldeaktuator erzeugt mittelbar oder unmittelbar auf die Fläche, auf die der Benutzer zum Auslösen des Schallsignals gedrückt hat, einen kurzen Stoßimpuls, so dass der Benutzer den Eindruck erhält, dass ein Schaltorgan bewegt wird, auch wenn dieses faktisch nicht der Fall sein sollte. Dabei kommt es üblicherweise gar nicht darauf an, ob der Rückmeldeaktuator den Impuls genau an der Stelle erzeugt, auf die der Benutzer zum Schalten der Funktion gedrückt hat.

Wesentlich ist ausschließlich die Tatsache, dass eine Relativbewegung oder eine Erschütterung der Fläche erfolgt. Ist zum Beispiel der Rückmeldeaktuator so ausgebildet und angeordnet, dass er auf die Rückseite der Tragplatte wirkt, kann er die ganze Tragplatte in Bewegung versetzen oder auch nur den Bereich, auf den der Benutzer gedrückt hat. Auch kann die ganze Waage vom Rückmeldeaktuator mit einem Kraftimpuls bewegt werden. So kann der Rückmeldeaktuator sogar in Bereich von Füßen der Waage angeordnet sein. Der Benutzer wird dies nicht merken, da er ausschließlich den Impuls bemerkt, der als Quittierung seines Schaltsignals auftritt.

Eine mögliche Ausgestaltung der Erfindung weist zum Beispiel eine zweilagige Tragplatte mit einer unteren Lastplatte und einer oberen Lastplatte auf. Die obere Lastplatte ist dabei über elastische Lager, beispielsweise als Gummilager oder Federlager, mit der unteren Lastplatte verbunden. Die Lagerung ist so ausgebildet, dass sich eine gegen die Federkraft gerichtete, in der möglichen Wegstrecke aber sehr kleine Beweglichkeit der oberen Lastplatte relativ zu der unteren Lastplatte ergibt. Diese Beweglichkeit ist bevorzugt so klein gehalten, dass der Benutzer sie kaum zur Kenntnis nehmen kann. Der haptische Rückmeldeaktuator ist zum Beispiel zwischen den beiden Lastplatten vorgesehen und löst einen Stoßimpuls nach seiner Aktivierung aus, der die obere Lastplatte von der unteren Lastplatte wegdrückt.

Eine andere Ausgestaltung zur Umsetzung der Erfindung weist eine Tragplatte mit einer unteren Lastplatte auf, die an der Stelle der Schaltaktuatoren Einsenkungen besitzt, in denen der Rückmeldeaktuator angeordnet ist. Auf diese untere Lastplatte ist dann eine elastische obere Platte aufgebracht, die an den Stellen der Einsenkungen das Schaltorgan eines Schaltaktuators aufweist.

Alternativ kann der Schaltaktuator auch in der Einsenkung angeordnet sein oder sogar auch von dem Rückmeldeaktuator gebildet sein. Die obere Platte kann wie ein Furnier oder eine Folie auf die untere Lastplatte aufgeklebt sein. Ihre Elastizität und Dicke sind dabei so gewählt, dass der Benutzer beim Betätigen des Schaltaktuators zwar den Stoß des haptischen Feedbacks spürt, aber das Eindrücken der oberen Platte in die Einsenkung nicht bemerkt.

Bei einer weiteren Ausgestaltung einer erfindungsgemäßen Waage sind die Rückmeldeaktuatoren in einem unteren Gehäuse vorgesehen, so dass sie auf die gesamte Tragplatte oder sogar auf die ganze Waage wirken. Im erstgenannten Fall ist der Rückmeldeaktuator Teil der Lagerung der Tragplatte an dem Gehäuse oder die Lagerung wird von einem oder mehreren Rückmeldeaktuatoren gebildet. Im zweitgenannten Fall kann zum Beispiel der Rückmeldeaktuator in die Wägezelle integriert sein.

Wesentlich für die Erfindung ist ausschließlich die Tatsache, dass ein der Schaltbewegung entgegengesetzter Kraftimpuls über zumindest einen Rückmeldeaktuator erzeugt wird, der vom Benutzer spürbar ist. Dabei kommt es nicht darauf an, dass dieser Kraftimpuls notwendigerweise an der gleichen Stelle wirkt, die der Benutzer zum Schalten des Schaltorgans berührt. Üblicherweise wird er nämlich, weil die Tragplatte nur an einer Stelle zum Schalten berührt, gar nicht merken, dass sich die gesamte Tragplatte oder gar die gesamte Waage aufgrund des Kraftimpulses bewegt.

Eine besonders vorteilhafte Ausgestaltung der Erfindung verwendet Schaltaktuatoren in Form von kapazitiven Näherungssensoren, deren Schaltorgan die oben bereits beschriebene und unterhalb der Tragplatte angeordnete Elektrode ist. Dies lässt sich einfach herstellen und erlaubt die Anordnung auch mehrere Elektroden bis hin zu einer tastaturartigen Anhäufung von Elektroden, wobei die Funktion der jeweiligen Bereiche oberhalb der Tragplatte durch Bedrohung oder Beleuchtung den Benutzer visuell zur Kenntnis gebracht werden kann. Wie oben beschrieben, sorgen die haptischen Rückmeldeaktuatoren bzw. gegebenenfalls auch nur ein einziger Rückmeldeaktuator für das haptische Feedback.

Eine weitere Ausgestaltung der Erfindung verwendet Aktuatoren, die sowohl Schaltaktuator als auch Rückmeldeaktuator sind. Ein solches Bauteil kann beispielsweise der oben bereits erwähnte haptische Aktuator PowerHap (Seriennummer 0909H011V060) der Firma TDK sein.

Eine weitere Möglichkeit, Schaltaktuator und Rückmeldeaktuator in einem gemeinsamen Bauteil zu integrieren ist ein so genannter dielektrischer Elastomersensor. Dielektrische Elastomersensoren sind Sensoren, die auf Druckbelastung reagieren. Hierzu weisen sie sensitive piezoelektrische Schichten auf, die über ein als Dielektrikum eingesetztes Elastomer miteinander verbunden sind, wobei ein Zusammendrücken der piezoelektrischen Schichten infolge der hierdurch veränderten elektrischen Eigenschaften des Kondensators als Schaltimpuls interpretiert wird.

Um einen dielektrischen Elastomersensor auch gleichzeitig als Rückmeldeaktuator mit haptischem Feedback umzusetzen, wird als Dielektrikum beispielsweise ein magnetorheologisches Elastomer verwendet. Magnetorheologische Elastomere sind Elastomere, die mit magnetischen Partikeln versetzt sind, so dass hierdurch der Werkstoff schaltbar wird. Sobald ein magnetisches Feld an dieses Elastomer angelegt wird, werden die magnetischen Teilchen in dem Dielektrikum polarisiert und üben Kräfte aufeinander aus. Hierdurch kann zum einen das Dielektrikum infolge eines Schaltdruckes versteift werden und zum anderen aber auch ein haptisches Feedback ausgelöst werden, indem die magnetischen Kräfte so ausgerichtet werden, dass sie der Druckbewegung des Benutzers entgegengerichtet sind. Die Funktionsweise von elastomerbasierten, kapazitiven Steuer-und Bedienelementen ist im Detail in der internationalen Patentanmeldung WO 2017/182649 A1 beschrieben, auf die zur Erläuterung der Funktion verwiesen wird.

Der dielektrische Elastomersensor kann auf die Tragplatte aufgebracht sein, wobei er entweder die gesamte Tragplatte abdecken kann oder auch nur einen Teilbereich der Tragplatte. Auch können natürlich mehrere solcher dielektrischen Elastomersensoren verwendet werden, um zum Beispiel verschiedene Schaltpositionen zu realisieren oder auch eine vollständige Folientastatur aufzubauen. Bei dieser Ausgestaltung wäre es auch möglich, mit einem solchen Sensor sogar die Wägezellen zu ersetzen, da ja das Wiegegut ebenfalls mit der Last die piezoelektrische Schichten aufeinander zu bewegt und so ein dem Gewicht proportionales Signal erzeugt.

Zusätzlich zum haptischen Feedback können über einen Geräuschgenerator auch Geräusche erzeugt werden, die dem eines Tastschalters ähneln.

Schließlich können auch mehrere Funktionalitäten in einen Schaltaktuator integriert werden, so ist es zum Beispiel möglich, dass ein Schaltaktuator bei längerem Auslösen des Schaltsignals, zum Beispiel bei länger andauerndem Berühren der Elektrode eines Näherungssensors, eine andere Funktion auslöst als bei nur einem kurzfristigen Annähern. Über ein unterschiedliches haptisches Feedback kann der Benutzer dann jeweils die ausgelöste Funktion zusätzlich zur Kenntnis gebracht werden.

Weitere Merkmale und Vorteile der Erfindung ergeben sich der nachfolgenden Beschreibung bevorzugter Ausführungsbeispiele anhand der Zeichnungen.

In den Zeichnungen zeigt:
- Fig. 1: ein Ausführungsbeispiel einer erfindungsgemäßen Waage in einer 3-dimensionalen Darstellung,
- Fig. 2: ein Ausführungsbeispiel einer erfindungsgemäßen Waage in einer Schnittansicht,
- Fig. 3: ein zweites Ausführungsbeispiel einer erfindungsgemäßen Waage in einer Schnittansicht,
- Fig. 4: ein drittes Ausführungsbeispiel einer erfindungsgemäßen Waage im Schnitt,
- Fig. 5: ein viertes Ausführungsbeispiel einer erfindungsgemäßen Waage im Schnitt,
- Fig. 6: ein fünftes Ausführungsbeispiel einer erfindungsgemäßen Waage im Schnitt,
- Fig. 7: die Einzelheit "Z" aus Figur 6 in vergrößerter Darstellung,
- Fig. 8: eine alternative Ausgestaltung des in Figur 7 dargestellten Bereichs,
- Fig. 9: die Integration eines haptischen Rückmeldeaktuators in eine Wägezelle in dreidimensionaler Darstellung,
- Fig. 10: eine Lösung der Integration eines haptischen Rückmeldeaktuators in eine Wägezelle in einer Schnittansicht und
- Fig. 11: eine zweite Lösung der Integration eines haptischen Rückmeldeaktuators in eine Wägezelle in einer Schnittansicht.

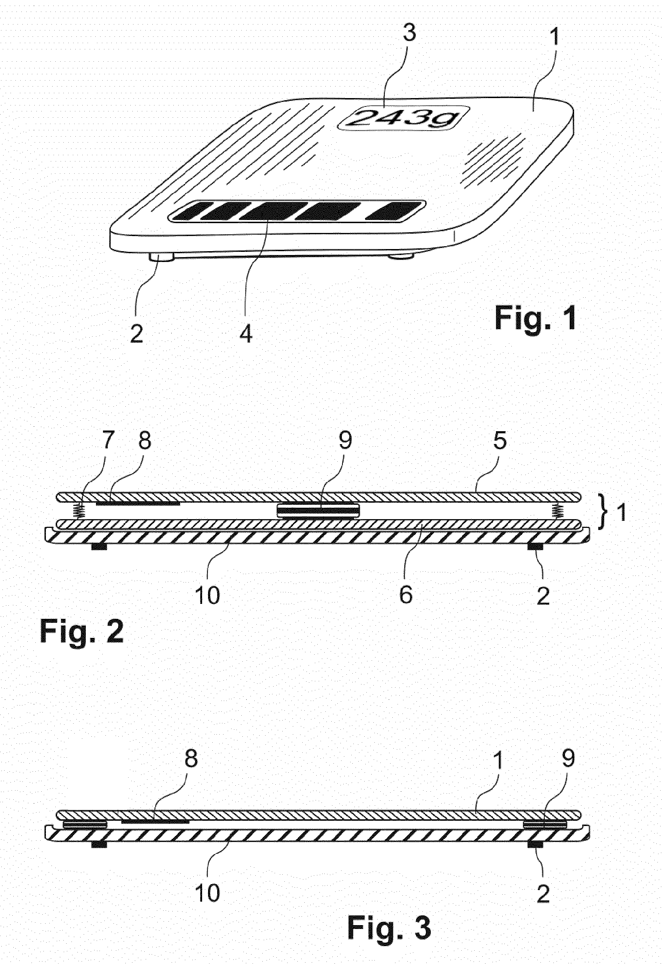

In Figur 1 ist eine Waage mit einer Tragplatte 1 und einer Anzeigevorrichtung 3 abgebildet, die unterhalb der Tragplatte 1 Wägezellen 2 aufweist, über die sie sich auf dem Untergrund abstützt. Im vorderen Bereich der Waage ist eine Schaltvorrichtung 4 zum Bedienen der Waage vorgesehen. Eine solche Waage kann als Personenwaage oder auch als Küchenwaage ausgebildet sein. Über die Schaltvorrichtung 4 kann die Waage eingeschaltet werden, es können aber auch weitere Eingaben hierüber getätigt werden. Letztlich ist die Art und Anzahl der Eingabemöglichkeiten für die vorliegende Erfindung nicht wesentlich.

Um dem Benutzer nun ein haptisches Feedback geben zu können, ist die Waage, entweder im Bereich der Schaltvorrichtung 4 oder an anderer Stelle entsprechend ausgestattet.

Figur 2 zeigt eine solche Lösung als erstes Beispiel. Hier ist die Tragplatte 1 zweilagig mit einer oberen Lastplatte 5 und einer unteren Lastplatte 6 ausgebildet. Die oberen Lastplatte 5 kann beispielsweise eine starre Glasplatte sein, die über elastische Lager 7 auf der unteren Lastplatte 6 gelagert ist. Exemplarisch ist in Figur 2 die Lagerung über an den Ecken der unteren Lastplatte 6 vorgesehene elastische Lager 7 in Form von Schraubenfedern dargestellt. Dies können aber auch Gummilager oder sonstige elastischen Lager sein. Unterhalb der oberen Lastplatte 5 ist eine Elektrode 8 eines kapazitiven Näherungssensors vorgesehen. Dieser Sensor kann zum Beispiel Teil der in Figur 1 dargestellten Schaltvorrichtung 4 sein.

Die zweilagige Tragplatte 1 wiederum ist an einem unteren Gehäuse 10 gelagert, das sich wiederum über die Wägezellen 2 auf dem Untergrund abstützt. Zwischen der oberen Lastplatte 5 und der unteren Lastplatte 6 ist nun erfindungsgemäß ein haptischer Rückmeldeaktuator 9 vorgesehen. Dieser erzeugt, gesteuert über die hier nicht dargestellte Elektronik der Waage, nach Auslösen eines Schaltsignals durch den kapazitiven Näherungssensors nach Annähern oder Berührung der Elektrode 8 einen Kraftimpuls, der die obere Lastplatte 5 nach oben drückt. Dieser kurze Kraftimpuls drückt die obere Lastplatte 5 lediglich um einen sehr kleinen Weg nach oben und wird durch ein Piezo-Element erzeugt, das sich infolge einer von der Elektronik als Reaktion auf das Auslösen des Schaltsignal angelegten Spannung spontan und impulsartig ausdehnt.

Ein besonderer Vorteil der Erfindung besteht nun darin, dass das haptische Feedback Teil der Anzeigevorrichtung 3 sein muss, die zwar bei vielen Küchen- oder Personenwagen unter der Tragplatte 1 angeordnet sind, sondern dass durch die Erregung oder Bewegung der gesamten Tragplatte 1 das haptische Feedback von der Anzeige vollständig unabhängig ist. In den meisten Fällen wird nämlich die Tragplatte 1 aus Glas bestehen, so dass ein Display, das seinerseits über ein haptisches Feedback verfügt, nicht verwendet werden kann. Bei solchen Wagen ist nämlich das Display üblicherweise unter der starren Glasplatte vorgesehen, so dass die Übertragung des haptischen Feedbacks auf die Glasplatte effektiv nicht möglich ist. Erfindungsgemäß kann nun eine Sensorik, insbesondere in Form von einem oder mehreren kapazitiven Näherungsschaltern unabhängig von der Lage und Größe der Anzeigevorrichtung 3 eingesetzt werden und trotzdem die Waage das haptische Feedback aufweisen.

Die in Figur 2 dargestellte Ausgestaltung eignet sich insbesondere für starre Lastplatten 5, zum Beispiel für die oben bereits genannten Glasplatten. Die Relativbeweglichkeit zwischen der oberen Lastplatte 5 und der unteren Lastplatte 6 ist dabei so gering, dass der Benutzer sie nicht bemerkt. Er wird lediglich den kurzen Stoß durch den haptischen Rückmeldeaktuator 9 bemerken. Für die Wirkung dieses haptischen Feedbacks ist es auch nicht wesentlich, dass sich der haptische Rückmeldeaktuator 9 unmittelbar unter der Elektrode 8 des Näherungssensors befindet. Er kann daher, wie hier dargestellt, auch im mittleren Bereich der Waage zwischen den Lagerungen über die elastischen Lager 7 vorgesehen sein.

In Figur 3 ist eine etwas andere Ausgestaltung der Waage dargestellt. Hier ist die Tragplatte 1 nur einlagig ausgebildet und stützt sich über an den Ecken der Tragplatte 1 angeordnete haptische Rückmeldeaktuatoren 9 auf einem Untergehäuse 10 ab. Auch hier steht dieses Untergehäuse 10 über Wägezellen 2 auf dem Untergrund auf. Unterhalb der Tragplatte 1 ist auch bei dieser Waage die Elektrode 8 eines Näherungssensors vorgesehen.

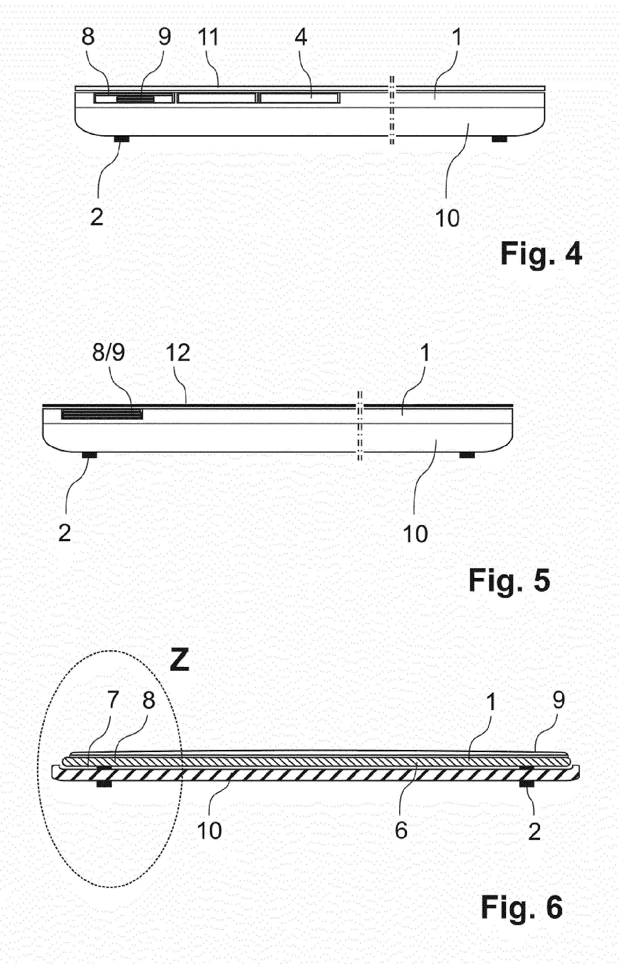

In Figur 4 ist eine Waage vorgesehen, die eine Tragplatte 1 aufweist, die auf einem unteren Gehäuse 10 fest montiert ist, wobei das Gehäuse 10 auch hier über Wägezellen 2 auf dem Untergrund abstützt. Die Tragplatte 1 weist eine Schaltvorrichtung 4 auf, die hier in eine Einsenkung integriert ist, die in einen unteren Teil der Tragplatte 1 eingebracht ist. In der Einsenkung sind sowohl die Elektrode 8 des Näherungssensors als auch der haptische Rückmeldeaktuator 9 vorgesehen. Um die Tragplatte 1 nach oben abzuschließen ist eine Abdeckplatte 11 vorgesehen, die als vergleichsweise starre Platte die Einsenkung und auch den übrigen Teil der Tragplatte 1 bedeckt.

Die Abdeckplatte 11 ist allerdings so elastisch, dass sie zwar vom Benutzer nicht sehr stark in die Einsenkung eingedrückt werden kann, aber dass sie den Kraftimpuls des haptischen Rückmeldeaktuator 9 an den Benutzer weitergeben kann. Hierbei ist vorteilhaft, dass der haptische Rückmeldeaktuator 9 unterhalb der Stelle angeordnet ist, die der Benutzer zum Schalten der Waage berührt. Die Elektrode 8 des Näherungssensors ist zwischen der Abdeckplatte 11 und dem haptischen Rückmeldeaktuator 9 vorgesehen.

In Figur 5 ist eine etwas andere Ausgestaltung dargestellt. Hier werden der haptische Rückmeldeaktuator 9 und der Schaltaktuator von einem gemeinsamen Bauteil gebildet. Dies kann beispielsweise dadurch geschehen, dass der haptische Rückmeldeaktuator die Elektrode 8 aufweist. Auch ein kombinierter Aktuator, wie er von der Firma TDK unter dem Markennamen PowerHap angeboten wird, kann hierzu eingesetzt werden. Eine solche Ausgestaltung bietet sich insbesondere dann an, wenn auf die starre Abdeckplatte 11 aus Figur 4 verzichtet werden kann und stattdessen eine elastische Zierabdeckung 12 verwendet werden soll.

In Figur 6 wiederum ist eine Ausgestaltung der Waage gezeigt, bei der die gesamte Tragplatte 1 oder die Tragplatte 1 abschnittsweise mit dem haptischen Rückmeldeaktuator 9 beschichtet ist. Als haptischer Rückmeldeaktuator 9 wird hier ein dielektrischer Elastomersensor verwendet. Dieser besteht aus zwei elastischen Piezofolien, zwischen denen eine Elastomerschicht angeordnet ist, das wiederum mit magnetischen Partikeln durchsetzt ist. Bei Anlegung einer Spannung an diese Schicht kann dann das haptische Feedback durch Aufrichten der magnetischen Partikel erzeugt werden.

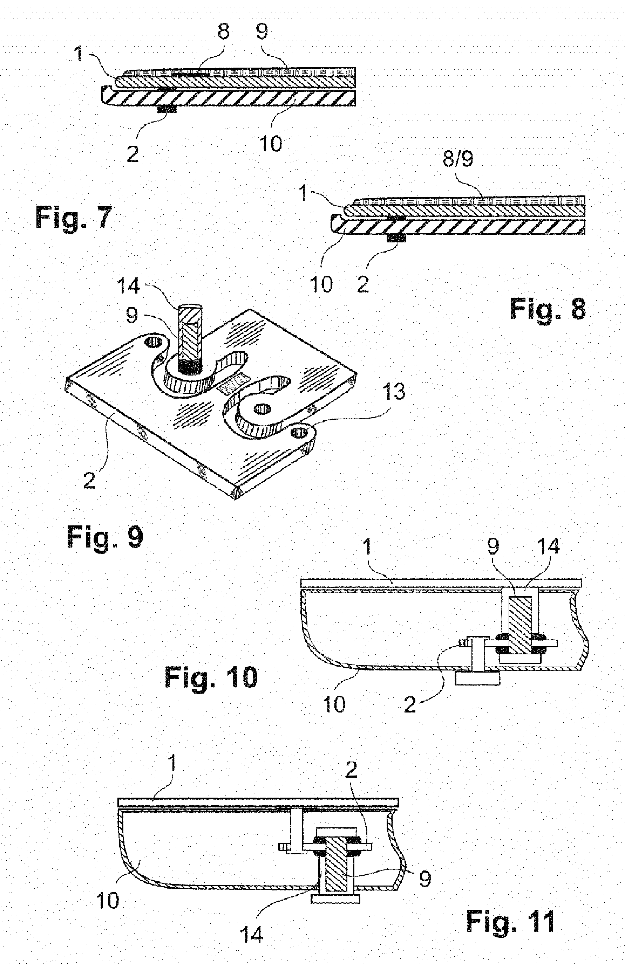

In Figur 7 ist die Einzelheit Z aus Figur 6 in vergrößerter Darstellung wiedergegeben. Hier ist zu erkennen, dass die Elektrode 8 des Näherungssensors zwischen dem folienartigen haptischen Rückmeldeaktuator 9 und der Tragplatte 1 angeordnet ist.

In Figur 8 wiederum eine Ausgestaltung gezeigt, bei der der dielektrische Elastomersensor gleichzeitig auch die Schaltfunktion übernimmt.

In den Figuren 9 10 und 11 wiederum sind andere Ausgestaltungen der Waage dargestellt. Hier ist der haptische Rückmeldeaktuator 9 die Wägezelle 2 integriert. Bei dieser Ausgestaltung ist die Wägezellen 2 über einen Piezo-Block mit dem Gehäuse 10 (Darstellung in Figur 10) oder einem Standfuß (Darstellung in Figur 11) verbunden.

Auf dem Piezo-Block ist ein Befestigungshalter 14 aufgebracht, die die Verbindung mit dem Gehäuse 10 bzw. dem Standfuß wirkt. An der Wägezelle 2 selbst ist der Piezo-Block über ein Gummilager gehalten. Bei dieser Ausgestaltung erzeugt also die Lagerung der Wägezelle 2 an der Waage den Kraftimpuls des haptischen Rückmeldeaktuators 9. Dies hat den Vorteil, dass der haptische Rückmeldeaktuator 9 in das Gehäuse 10 unauffällig integriert werden kann.

In allen Abbildungen wurde zur deutlicheren Darstellung der Funktionsteile auf die Darstellung der Leitungen zur Verbindung der jeweiligen Bauteile mit der Elektronik verzichtet.

### Bezugszeichenliste:

- 1: Tragplatte
- 2: Wägezelle
- 3: Anzeigevorrichtung
- 4: Schaltvorrichtung
- 5: Obere Lastplatte
- 6: Untere Lastplatte
- 7: Elastisches Lager
- 8: Elektrode eines kapazitiven Näherungssensors
- 9: Haptischer Rückmeldeaktuator
- 10: Gehäuse
- 11: Abdeckplatte
- 12: Elastische Zierabdeckung
- 13: Wägezellenbefestigung
- 14: Befestigungshalter

## Patentansprüche

1. Waage mit
• einer Tragplatte (1) zur Aufnahme einer zu wiegenden Last,
• einer Sensorik mit zumindest einem Messsensor zur Ermittlung wenigstens einer, für das Gewicht der Last signifikanten Größe,
• einer Elektronik zur Berechnung eines Wiegeergebnisses aus einem von der Sensorik bereitgestellten Messergebnis und mit
• einer an der Tragplatte (1) angeordneten Schaltvorrichtung (4),
wobei die Schaltvorrichtung (4) wenigstens einen Schaltaktuator zum Auswählen oder Anwählen einer Funktion der Waage, über den ein Benutzer über eine von der Schaltvorrichtung detektierbare Schalthandlung die jeweilige Funktion der Waage auszuwählen oder anzuwählen vermag, umfasst, und wobei die Schalthandlung das Ausüben eines Drucks auf einen an der Tragplatte (1) vorgesehenen und der Funktion zugeordneten Schaltbereich oder das Annähern, insbesondere das eine zumindest leichte Berührung zum Anwählen erfordernde Annähern an einen näherungssensitiven Schaltbereich der Waage umfasst,
**dadurch gekennzeichnet, dass**
die Waage zumindest einen haptischen Rückmeldeaktuator (9) umfasst, der bei erkannter Schalthandlung ein haptisches Feedback für den Benutzer durch mechanische Erregung oder Bewegung der Tragplatte (1) und damit des darauf angeordneten Schaltbereichs zu erzeugen vermag.

2. Waage nach Anspruch 1, **dadurch gekennzeichnet, dass** zumindest ein Schaltaktuator in Form eines kapazitiven Näherungssensors, eines dielektrischen Elastomersensors, eines Folien- oder Tastschalters, eines Vibrationssensors oder eines Thermosensors vorgesehen ist und/oder dass zumindest ein Schaltaktuator von einer Wägezelle (2) oder einem Verbund aus zwei oder mehr Wägezellen (2) der Waage gebildet ist.

3. Waage nach einem der beiden vorhergehenden Ansprüche, **dadurch gekennzeichnet, dass** der haptische Rückmeldeaktuator (9) ein Piezoaktuator mit zumindest einem, bevorzugt aber zwei oder mehr Piezobausteinen ist, die sich infolge einer Aktivierung durch die Elektronik in einem Winkel, insbesondere einem rechten Winkel zum Schaltbereich der Schaltvorrichtung (4) auszudehnen vermögen.

4. Waage nach einem der vorhergehenden Ansprüche, **dadurch gekennzeichnet, dass** die Tragplatte (1) wenigstens zweilagig mit einer unteren Lastplatte (6) und einer oberen Lastplatte (5) ausgebildet ist, wobei die obere Lastplatte (5) über zumindest ein elastisches Lager (7) mit unteren Lastplatte (6) verbunden ist und der haptischen Rückmeldeaktuator (9) zwischen der unteren Lastplatte (6) und der oberen starren Lastplatte (5) derart angeordnet ist, dass er bei Aktivierung durch die Elektronik wenigstens einen von der unteren Lastplatte (6) weg gerichteten Impuls auf die Unterseite der oberen Lastplatte (5) aufzubringen vermag.

5. Waage nach einem der vorhergehenden Ansprüche, **dadurch gekennzeichnet, dass** die Waage eine in die Tragplatte (1) auf einer Seite der Tragplatte (1) integrierte Anzeigevorrichtung (3) und auf der gegenüberliegenden Seite der Tragplatte (1) den Schaltbereich mit der in die Tragplatte (1) integrierten Schaltvorrichtung (4) aufweist, wobei die obere starre Lastplatte (5) zumindest im Bereich der Schaltvorrichtung (4) über wenigstens ein, im Randbereich der Tragplatte (1) oder im Randbereich des Schaltbereichs vorgesehenes elastisches Lager (7) mit der unteren Lastplatte (6) verbunden ist, wobei der haptische Rückmeldeaktuator (9) von unten auf den Schaltbereich wirkt.

6. Waage nach einem der Ansprüche 1 bis 4, **dadurch gekennzeichnet, dass** die Tragplatte (1) eine untere Lastplatte (6) umfasst, wobei in der unteren Lastplatte (6) zur Bildung eines Schaltbereichs ein Aufnahmeraum in Form eines Hohlraums oder einer Einsenkung in die Oberseite der unteren Lastplatte (6) vorgesehen ist, in dem der Schaltaktuator sowie der haptische Rückmeldeaktuator (9) in dem Aufnahmeraum angeordnet sind, und wobei die Oberseite der unteren Lastplatte (6) zur Abdeckung des Aufnahmeraum (4) wenigstens abschnittsweise mit einer elastischen Zierabdeckung (12) versehen ist.

7. Waage nach einem der vorhergehenden Ansprüche, **dadurch gekennzeichnet, dass** der Schaltaktuator und der haptische Rückmeldeaktuator (9) von einem gemeinsamen Bauteil gebildet sind, insbesondere von einem näherungs- oder berührungsempfindlichen Sensor mit haptischer Rückmeldung gebildet sind.

8. Waage nach dem vorhergehenden Anspruch, **dadurch gekennzeichnet, dass** der Schaltaktuator und der haptische Rückmeldeaktuator (9) eine elastische Beschichtung der Tragplatte (1) bilden, die die Tragplatte (1) abschnittsweise oder vollständig bedeckt.

9. Waage nach dem vorhergehenden Anspruch, **dadurch gekennzeichnet, dass** der näherungs- oder berührungsempfindliche Sensor mit haptischer Rückmeldung ein dielektrischer Elastomersensor mit haptischer Rückmeldefunktion ist.

10. Waage nach einem der Ansprüche 1, 2 oder 3, **dadurch gekennzeichnet, dass** die Waage ein Gehäuse (10) aufweist, an dem die Tragplatte (1) beweglich gelagert ist, wobei der Schaltbereich und der haptische Rückmeldeaktuator (9) an dem Gehäuse (10) außerhalb des Bereichs der Tragplatte (1) vorgesehen sind.

11. Waage nach einem der Ansprüche 1, 2 oder 3, **dadurch gekennzeichnet, dass** die Waage Wägezellen (2) aufweist, über die sich die Tragplatte (1) mittelbar oder unmittelbar auf dem Untergrund abstützt, wobei die Wägezellen (2) einseitig mit der Tragplatte (1) oder einem Unterbau der Tragplatte (1) und mit der korrespondierenden Seite mit einem Standfuß oder einem Untergehäuse verbunden sind und wobei der haptische Rückmeldeaktuator (9) in die Verbindung der Wägezelle (2) integriert ist.

12. Waage nach dem vorhergehenden Anspruch, **dadurch gekennzeichnet, dass** der der haptische Rückmeldeaktuator (9) zumindest einen Piezobaustein aufweist, der einseitig mit der Tragplatte (1) oder dem Unterbau und mit der gegenüberliegenden Seite mit der Wägezelle (2) oder einseitig mit einem Standfuß oder einem Untergehäuse und mit der gegenüberliegenden Seite mit der Wägezelle (2) unmittelbar oder mittelbar verbunden ist.

13. Waage nach einem der vorhergehenden Ansprüche, **dadurch gekennzeichnet, dass** die Waage zusätzlich einen akustischen Signalgeber aufweist, der bei erkannter Schalthandlung ein, insbesondere der Betätigung eines Tastschalters ähnliches Geräusch zu erzeugen vermag.

14. Waage nach einem der vorhergehenden Ansprüche, **dadurch gekennzeichnet, dass** die Waage derart ausgebildet ist, dass Schaltvorrichtung (4) bei Ausüben eines kurzen Drucks auf einen an der Tragplatte (1) angeordneten Schaltbereich oder das berührende Annähern an einen näherungssensitiven Schaltbereich der Waage ein erster Benutzerbefehl erkannt wird und bei längeren Druck auf den gleichen Schaltbereich ein zweiter Benutzerbefehl erkannt wird, wobei der haptische Rückmeldeaktuator (9) und die Elektronik derart ausgebildet sind, dass sie in Abhängigkeit des erkannten Benutzerbefehls unterschiedliche Rückmeldungen, insbesondere durch interschiedliche Intensitäten oder Frequenzen des der Benutzerbewegung entgegengerichteten Impulses zu erzeugen vermögen.

15. Waage nach einem der vorhergehenden Ansprüche, **dadurch gekennzeichnet, dass** die Waage eine insbesondere akku- oder batteriebetriebene Brief-, Küchen- oder Personenwaage ist.

## Claims

1. Scale with
• a support plate (1) for receiving a load to be weighed,
• a sensor system with at least one measuring sensor for determining at least one parameter significant for the weight of the load,
• an electronic unit for calculating a weighing result from a measurement result provided by the sensor system, and with
• a switching device (4) arranged on the support plate (1),
wherein the switching device (4) comprises at least one switching actuator for selecting or choosing a function of the scale, by means of which a user is able to select or choose the respective function of the scale by means of a switching action which can be detected by the switching device, and wherein the switching action comprises exerting pressure on a switching area provided on the support plate (1) and assigned to the function or approaching, in particular approaching which requires at least light contact for choosing, a proximity-sensitive switching area of the scale,
**characterized in that**
the scale comprises at least one haptic feedback actuator (9) which, when a switching action is detected, is capable of generating a haptic feedback for the user by means of mechanical excitation or movement of the support plate (1) and thus of the switching area arranged thereon.

2. Scale according to claim 1, **characterized in that** at least one switching actuator is provided in the form of a capacitive proximity sensor, a dielectric elastomer sensor, a membrane or tactile switch, a vibration sensor or a thermal sensor and/or that at least one switching actuator is formed by a load cell (2) or a composite of two or more load cells (2) of the scale.

3. Scale according to one of the two preceding claims, **characterized in that** the haptic feedback actuator (9) is a piezo actuator with at least one, but preferably two or more piezo components which, as a result of activation by the electronic unit, are capable of extending at an angle, in particular a right angle, to the switching range of the switching device (4).

4. Scale according to one of the preceding claims, **characterized in that** the support plate (1) is embodied in at least two layers with a lower load plate (6) and an upper load plate (5), the upper load plate (5) being connected to the lower load plate (6) via at least one elastic bearing (7), and the haptic feedback actuator (9) being arranged between the lower load plate (6) and the upper rigid load plate (5) in such a way that, when activated by the electronics, it is capable of applying at least one pulse directed away from the lower load plate (6) to the bottom side of the upper load plate (5).

5. Scale according to one of the preceding claims, **characterized in that** the scale comprises a display device (3) integrated into the support plate (1) on one side of the support plate (1) and on the opposite side of the support plate (1) the switching area with the switching device (4) integrated into the support plate (1), wherein the upper rigid load plate (5) is connected to the lower load plate (6) at least in the zone of the switching device (4) via at least one elastic bearing (7) provided in the edge zone of the support plate (1) or in the edge zone of the switching zone, wherein the haptic feedback actuator (9) impacts the switching zone from below.

6. Scale according to one of the claims 1 to 4, **characterized in that** the support plate (1) comprises a lower load plate (6), wherein a receiving space in the form of a hollow space or a depression is provided in the upper side of the lower load plate (6) for forming a switching area, in which the switching actuator and the haptic feedback actuator (9) are arranged in the receiving space, and wherein the upper side of the lower load plate (6) is provided at least in sections with an elastic decorative cover (12) for covering the receiving space (4).

7. Scale according to one of the preceding claims, **characterized in that** the switching actuator and the haptic feedback actuator (9) are constituted by a common component, in particular by a proximity-sensitive or touch-sensitive sensor with haptic feedback.

8. Scale according to the preceding claim, **characterized in that** the switching actuator and the haptic feedback actuator (9) constitute an elastic coating of the supporting plate (1), which covers the supporting plate (1) in sections or completely.

9. Scale according to the preceding claim, **characterized in that** the proximity- or touch-sensitive sensor with haptic feedback is a dielectric elastomer sensor with haptic feedback function.

10. Scale according to one of the claims 1, 2 or 3, **characterized in that** the scale comprises a housing (10) on which the supporting plate (1) is movably supported, the switching zone and the haptic feedback actuator (9) being provided on the housing (10) outside the zone of the supporting plate (1).

11. Scale according to one of the claims 1, 2 or 3, **characterized in that** the scale comprises load cells (2) by means of which the supporting plate (1) is supported indirectly or directly on the base, the load cells (2) being connected on one side to the supporting plate (1) or a substructure of the supporting plate (1) and on the corresponding side to a stand or a subhousing, and the haptic feedback actuator (9) being integrated into the connection of the load cell (2).

12. Scale according to the preceding claim, **characterized in that** the haptic feedback actuator (9) comprises at least one piezo module which is directly or indirectly connected on one side to the supporting plate (1) or the substructure and on the opposite side to the load cell (2) or on one side to a base or a substructure and on the opposite side to the load cell (2).

13. Scale according to one of the preceding claims, **characterized in that** the scale additionally comprises an acoustic signal transmitter which is capable of generating a noise, in particular similar to the actuation of a pushbutton switch, when a switching action is detected.

14. Scale according to one of the preceding claims, **characterized in that** the scale is embodied in such a way that switching device (4) recognizes a first user command when a short pressure is exerted on a switching area arranged on the supporting plate (1) or when a proximity-sensitive switching area of the scale is approached, and recognizes a second user command when a longer pressure is exerted on the same switching area, wherein the haptic feedback actuator (9) and the electronics are embodied in such a way that they are capable of generating different feedback signals in dependence on the recognized user command, in particular by means of different intensities or frequencies of the pulse directed against the user movement.

15. Scale according to one of the preceding claims, **characterized in that** the scale is a letter, kitchen or personal scale, in particular a battery-operated scale.

## Revendications

1. Balance comprenant
• une plaque de support (1) pour le récepteur d'une charge à peser,
• un système de capteurs comprenant au moins un capteur de mesure pour déterminer au moins une grandeur significative pour le poids de la charge,
• d'une électronique pour calculer un résultat de pesée à partir d'un résultat de mesure fourni par le système de capteurs et comprenant
• un dispositif de commutation (4) disposé sur la plaque de support (1),
le dispositif de commutation (4) comprenant au moins un actionneur de commutation pour sélectionner ou choisir une fonction de la balance, par lequel un utilisateur peut sélectionner ou choisir la fonction respective de la balance par une action de commutation pouvant être détectée par le dispositif de commutation, et l'action de commutation comprenant l'exercice d'une pression sur une zone de commutation prévue sur la plaque de support (1) et associée à la fonction ou l'approche, en particulier l'approche nécessitant un contact au moins léger pour la sélection, d'une zone de commutation sensible à l'approche de la balance,
**caractérisé en ce que**
la balance comprend au moins un actionneur haptique de rétroaction (9) qui, en cas d'action de commutation reconnue, est en mesure de générer un retour haptique pour l'utilisateur par excitation mécanique ou mouvement de la plaque de support (1) et donc de la zone de commutation disposée sur celle-ci.

2. Balance selon la revendication 1, **caractérisée en ce qu'**au moins un actionneur de commutation est prévu sous la forme d'un capteur de proximité capacitif, d'un capteur élastomère diélectrique, d'un interrupteur à film ou à touche, d'un capteur de vibrations ou d'un capteur thermique et/ou **en ce qu'**au moins un actionneur de commutation est formé par une cellule de pesage (2) ou un ensemble de deux ou plusieurs cellules de pesage (2) de la balance.

3. Balance selon l'une des deux revendications précédentes, **caractérisée en ce que** l'actionneur haptique de rétroaction (9) est un actionneur piézoélectrique comprenant au moins un, mais de préférence deux ou plusieurs composants piézoélectriques qui, suite à une activation par l'électronique, peuvent s'étendre selon un angle, en particulier un angle droit par rapport à la zone de commutation du dispositif de commutation (4).

4. Balance selon l'une des revendications précédentes, **caractérisée en ce que** le plateau de support (1) est formé d'au moins deux couches comprenant un plateau de charge inférieur (6) et un plateau de charge supérieur (5), la plaque de charge supérieure (5) est reliée à la plaque de charge inférieure (6) par l'intermédiaire d'au moins un palier élastique (7) et l'actionneur de rétroaction haptique (9) est disposé entre la plaque de charge inférieure (6) et la plaque de charge supérieure rigide (5) de telle sorte que, lorsqu'il est activé par l'électronique, il est capable d'appliquer au moins une impulsion dirigée à l'opposé de la plaque de charge inférieure (6) sur la face inférieure de la plaque de charge supérieure (5).

5. Balance selon l'une des revendications précédentes, **caractérisée en ce que** la balance comprend sur une face du plateau support (1) un dispositif d'affichage (3) intégré au plateau support (1) et sur la face opposée du plateau support (1) la zone de commutation comprenant le dispositif de commutation (4) intégré au plateau support (1), la plaque de charge supérieure rigide (5) étant reliée, au moins dans la zone du dispositif de commutation (4), à la plaque de charge inférieure (6) par l'intermédiaire d'au moins un palier élastique (7) qui est prévu dans la zone de bordure de la plaque de support (1) ou dans la zone de bordure de la zone de commutation, l'actionneur de rétroaction haptique (9) agissant par le bas sur la zone de commutation.

6. Balance selon l'une des revendications 1 à 4, **caractérisée en ce que** le plateau de support (1) comprend un plateau de charge inférieur (6), un espace de réception sous la forme d'un espace creux ou d'un renfoncement dans la face supérieure du plateau de charge inférieur (6) étant prévu dans le plateau de charge inférieur (6) pour former une zone de commutation, dans lequel l'actionneur de commutation ainsi que l'actionneur haptique de rétroaction (9) sont disposés dans l'espace de réception, et dans lequel la face supérieure de la plaque de charge inférieure (6) est pourvue, au moins par endroits, d'un recouvrement décoratif élastique (12) pour recouvrir l'espace de réception (4).

7. Balance selon l'une des revendications précédentes, **caractérisée en ce que** l'actionneur de commutation et l'actionneur de rétroaction haptique (9) sont formés par un composant commun, en particulier par un capteur sensible à l'approche ou au toucher avec rétroaction haptique.

8. Balance selon la revendication précédente, **caractérisée en ce que** l'actionneur de commutation et l'actionneur de rétroaction haptique (9) forment un revêtement élastique du plateau de support (1) qui recouvre partiellement ou entièrement le plateau de support (1).

9. Balance selon la revendication précédente, **caractérisée en ce que** le capteur sensible à l'approche ou au toucher avec rétroaction haptique est un capteur élastomère diélectrique avec fonction de rétroaction haptique.

10. Balance selon l'une des revendications 1, 2 ou 3, **caractérisée en ce que** la balance comprend un boîtier (10) sur lequel est monté mobile le plateau support (1), la zone de commutation et l'actionneur haptique de rétroaction (9) étant prévus sur le boîtier (10) en dehors de la zone du plateau support (1).

11. Balance selon l'une des revendications 1, 2 ou 3, **caractérisée en ce que** la balance comprend des cellules de pesage (2) par l'intermédiaire desquelles le plateau de support (1) s'appuie directement ou indirectement sur le sol, les cellules de pesage (2) étant reliées d'un côté au plateau de support (1) ou à une structure inférieure du plateau de support (1) et, par la face correspondante, à un pied ou à un boîtier inférieur, et l'actionneur haptique de réponse (9) étant intégré dans la liaison de la cellule de pesage (2).

12. Balance selon la revendication précédente, **caractérisée en ce que** l'actionneur haptique de rétroaction (9) comprend au moins un composant piézoélectrique qui est relié directement ou indirectement d'un côté à la plaque de support (1) ou au châssis et, par la face opposée, à la cellule de pesée (2), ou d'un côté à un pied ou à un boîtier inférieur et, par la face opposée, à la cellule de pesée (2).

13. Balance selon l'une des revendications précédentes, **caractérisée en ce que** la balance comprend en outre un générateur de signaux acoustiques qui, lorsqu'une action de commutation est détectée, est en mesure de produire un bruit similaire, en particulier, à l'actionnement d'un interrupteur à touche.

14. Balance selon l'une des revendications précédentes, **caractérisée en ce que** la balance est conçue de telle sorte que le dispositif de commutation (4) reconnaît une première instruction d'utilisateur lorsqu'il exerce une courte pression sur une zone de commutation disposée sur la plaque de support (1) ou lorsqu'il s'approche en la touchant d'une zone de commutation sensible à l'approche de la balance, et qu'il reconnaît une deuxième instruction d'utilisateur lorsqu'il exerce une pression plus longue sur la même zone de commutation, l'actionneur haptique de rétroaction (9) et l'électronique étant conçus de telle sorte qu'ils peuvent produire, en fonction de l'ordre d'utilisateur reconnu, des rétroactions différentes, en particulier par des intensités ou des fréquences différentes de l'impulsion dirigée en sens inverse du mouvement de l'utilisateur.

15. Balance selon l'une des revendications précédentes, **caractérisée en ce que** la balance est un pèse-lettre, un pèse-personne ou un pèse-cuisine fonctionnant en particulier sur batterie ou sur piles.
